# EUROPÄISCHE PATENTANMELDUNG

(11) **EP 1 790 832 A1**
(43) Veröffentlichungstag der Anmeldung: **30.05.2007**
(21) Anmeldenummer: 05405659.3
(22) Anmeldetag: 23.11.2005
(51) Int. Cl.: F01D 25/14, F02B 37/00, F02B 77/11, F01N 5/04

(54) **Isolierung für ein Abgasturbolader**

(71) Anmelder: ABB Turbo Systems AG, 5400 Baden (CH)
(72) Erfinder: Mülhaupt, Frank, 79771 Klettgau (DE); Oeschger, Daniel, 5085 Sulz (CH); Hediger, Thomas, 5107 Schinznach-Dorf (CH)
(74) Vertreter: ABB Patent Attorneys

(57) **Zusammenfassung**

Die strapazierten und hoch belasteten Randbereiche (13) der Isolationssegmente für Abgasturbolader werden erfindungsgemäss durch ein Kantenschutzband (32) geschützt.

Dank dem Kantenschutzband können die Ränder der Isolationssegmente bei der Montage oder Demontage oder aber während dem Betrieb nicht ausfransen. Somit können Vorspannungsverluste in den Schnittstellen mehrerer aneinander gereihter Isolationssegmente verhindert werden.

## Beschreibung

### Technisches Gebiet

Die Erfindung bezieht sich auf das Gebiet der thermischen Isolierung von Turboladern für aufgeladene Brennkraftmaschinen. Sie betrifft ein Isolationssegment zur thermischen Isolation von Abgasturbinengehäusen sowie einen Abgasturbolader mit einem Gehäuse mit derartigen Isolationssegmenten.

### Stand der Technik

Abgasturbolader, welche in Motorräumen von Hochseeschiffen, anderen mit Brennstoff betriebenen Fahrzeugen oder stationären Anlagen eingesetzt werden, müssen aufgrund verschiedener internationaler Sicherheitsstandards thermisch isoliert werden. Beispielsweise schreibt die ,Safety Of Life At Sea-Convention' (SOLAS) vor, dass Oberflächen von Geräten im Maschinenraum von Hochseeschiffen, welche eine Oberflächentemperatur von mehr als 220° C aufweisen können, genügend isoliert sein müssen.

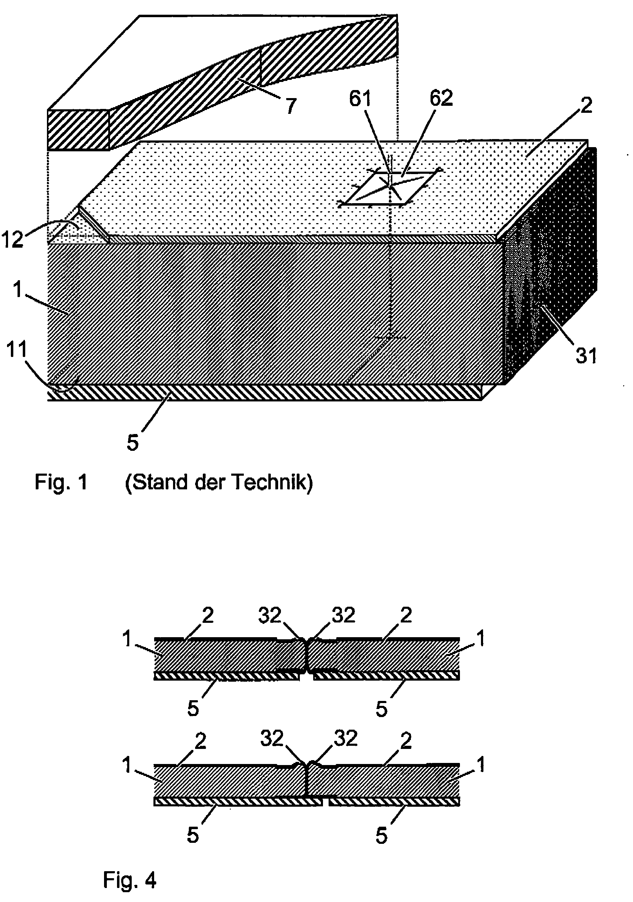

Die üblicherweise verwendete Isolierung für Turbolader setzt sich aus mehreren, aneinandergereiht angeordneten Isolationssegmenten zusammen. Ein solches, in Fig. 1 dargestelltes Isolationssegment umfasst einen Isolationskern (1) aus einer Glasfaser- oder Silikatfasermatte, welche auf einem Trägerblech (5) befestigt wird. Auf der dem heissen, thermisch zu isolierenden Gehäuseteil zugewandten Aussenfläche (12) des lsolationskerns ist zum Schutz des faserigen Kernmaterials und zur Reflektion der Hitze eine Metallfolie (2), beispielsweise aus Aluminium oder Edelstahl angebracht. Die einzelnen Isolationssegmente werden über einen Unterbau am Turboladergehäuse befestigt, so dass der Turbolader und die Isolation eine Einheit bilden. Dabei werden die einzelnen Isolationssegmente derart aneinandergereiht, dass ihre seitlichen Ränder unter Vorspannung gegeneinander gepresst sind. Bei herkömmlichen Isolationssegmenten sind die seitlichen Ränder mit einem temperaturbeständigen Farbanstrich (31) versehen.

Der Farbanstrich soll bei herkömmlichen Isolationen von Turboladern die Monteure vor einem direkten Kontakt mit den Isolationsfasern schützen, um allfällige Hautreizungen zu vermeiden. Weiter soll der Farbanstrich verhindern, dass die Ränder der einzelnen Isolationssegmente bei der Montage/ Demontage ausfransen oder aufgrund der Vibrationen des Turboladers gar einzelne oder eine Vielzahl Isolationsfasern aus dem Kern gelöst werden. Ein solches Ausfransen oder Ausdünnen des Kerns würde zu einem Vorspannungsverlust zwischen den einzelnen, aneinander gereihten Isolatiorissegmenten und im Extremfall zu einem Isolationsverlust und damit zu einem Temperaturanstieg der exponierten Oberfläche führen.

Nach längerem Betrieb kann es vorkommen, dass sich der Farbanstrich durch Scheuern oder aufgrund hoher Feuchtigkeit oder schwankender Temperaturen von dem Isolationssegment löst. Werden dadurch die Anforderungen nicht mehr erfüllt, müssen die Isolationssegmente ausgetauscht werden.

### Kurze Darstellung der Erfindung

Die Aufgabe der vorliegenden Erfindung besteht darin, einen verbesserten Kantenschutz für Isolationssegmente für Abgasturbolader zu schaffen.

Die strapazierten und hoch belasteten Randbereiche der Isolationssegmente werden erfindungsgemäss durch ein Kantenschutzband geschützt.

Dank dem Kantenschutzband können die Ränder der Isolationssegmente bei der Montage oder Demontage oder aber aufgrund betriebsbedingter Vibrationen nicht ausfransen. Somit können Vorspannungsveduste in den Schnittstellen mehrerer aneinander gereihter Isolationssegmente verhindert und die Funktion der Isolation gewährleistet werden.

Zudem sind die Monteure auch nach längerem Betrieb des Turboladers nachhaltig vor einem direkten Kontakt mit den lsolationsfasern geschützt.

Weitere Vorteile ergeben sich aus den abhängigen Patentansprüchen.

### Kurze Beschreibung der Zeichnungen

Das erfindungsgemässe Isolationssegment wird anschliessend anhand von Zeichnungen näher erläutert. Hierbei zeigt
- Fig. 1: ein Isolationssegment gemäss dem Stand der Technik mit einer Farbschicht als Kantenschutz,
- Fig. 2: eine erste erfindungsgemässe Ausführungsform eines Isolationssegments mit einem ummantelnden Kantenschutzband,
- Fig. 3: eine zweite erfindungsgemässe Ausführungsform eines Isolationssegments mit einem unter eine Deckfolie geschobenen Kantenschutzband, und
- Fig. 4: zwei Anordnungen zweier erfindungsgemässer lsolationssegmente.

### Weg zur Ausführung der Erfindung

Insbesondere diejenigen Turboladergehäuseteile mit den heissesten Oberflächentemperaturen, etwa das turbinenseitige Gaseintritts- oder Gasaustrittsgehäuse, werden mit mehreren, aneinandergereiht angeordneten Isolationssegmenten abgedeckt. Die Isolationssegmente werden mittels eines Unterbaus am Gehäuse des Turboladers befestigt. Im montierten Zustand sind Turbolader und Isolation eine Einheit. In der ersten der drei Figuren ist ein herkömmliches Isolationssogment zur thermischen Isolierung eines Abgasturboladers dargestellt. Damit ein Isolationssegment bereits im unmontierten Zustand formbeständig ist, ist der Kern 1 des Isolationssegments zumindest teilweise mit seiner Grundfläche 11 auf einem Trägerblechsegment 5 angeordnet. Im montierten Zustand bildet das Trägerblech dann die Aussenhülle der Isolation. Der Isolationskern kann auf dem Trägerblechsegment angeklebt, angenietet, angenäht oder auf andere Weise befestigt sein. In den Abbildungen dieser Anmeldung ist der Isolationskern jeweils mittels eines Federspannblechs 62, welches auf eine am Trägerblechsegment festgeschweisste Befestigungsnadel 61 aufgesteckt wird, am Trägerblech befestigt. Das Federspannblech kann rund oder eckig ausgebildet sein. Der Isolationskern besteht üblicherweise aus einer Glasfaser- oder Silikatfasermatte. Wie bereits eingangs erwähnt, ist es bei herkömmlichen lsolationssegmenten üblich, zum Schutze des weichen, faserigen Isolationskerns 1 und zur Hitzereflektion dessen äussere, dem zu isolierenden Gehäuseteil 7 zugewandte Oberfläche mit einer Metallfolie 2 abzudecken, beispielsweise aus Aluminium oder Edelstahl. Zudem werden die auf die gewünschten Abmessungen zugeschnittenen lsolationssegmante an den seitlichen Kantenbereichen mittels einer Kantenschutzfarbe 31 versiegelt.

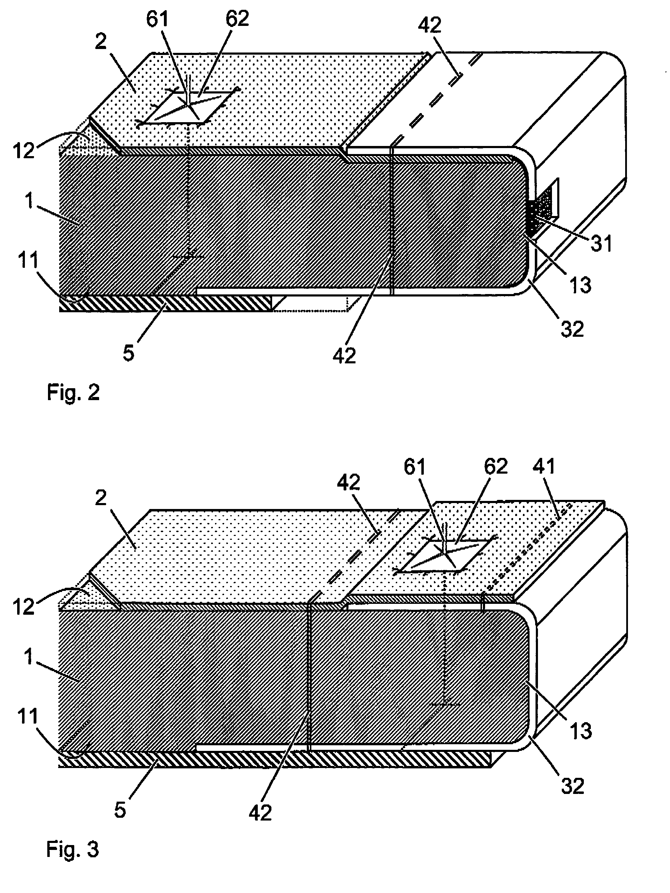

Bei den erfindungsgemässen Ausführungsformen der Isolationssegmente gemäss Fig. 2 und Fig. 3 wird der Isolationskern im Bereich der seitlichen Kanten anstelle oder ergänzend zu der herkömmlichen Farbschicht 31 mit einem Kantenschutzband 32 ummantelt.

In der ersten Ausführungsform gemäss Fig. 2 ist das Kantenschutzband 32 über einer bei herkömmlichen lsolationssegmenten verwendeten Farbschicht 31 angeordnet. Falls eine solche Farbschicht 31 zusätzlich zum Kantenschutzband verwendet wird, schützt diese den Isolationskern bis zur und während der Montage des Kantenschutzbandes. Enthält die Farbe eine Leimkomponente, kann sie zusätzlich auch eine adhäsive Funktion übernehmen und einer verbesserten Befestigung sowie einer satten Auflage des Kantenschutzbandes auf dem Isolationskern dienen.

Auf der Aussenseite 12 des Isolationskerns ist im Bereich der dargestellten seitlichen Kante 13 das Kantenschutzband 32 über den Randbereich der Deckfolie 2 geschoben. Diese Anordnung erlaubt eine einfache Montage des Kantenschutzbandes auf dem bereits mit einer Deckfolie versehenen Isolationskern. Alternativ kann jedoch das Kantenschutzband 32 auch vor der Befestigung am Isolationskern, zwischen die Aussenfläche 12 des Isolationskerns und die Deckfolie 2 geschoben werden, wie in Fig. 3 dargestellt. In beiden Fällen kann mit einer Überlappung von Deckfolie und Kantenschutzband sichergestellt werden, dass die Aussenfläche des Isolationskerns lückenlos abgedeckt ist.

Um beim Aneinanderreihen von mehreren Isolationssegmenten eine Vorspannung zwischen den einzelnen Isolationskernen aufbauen zu können, überragen die Isolationssegmente die Trägerbleche geringfügig. Dabei können, wie in der oberen Hälfte von Fig. 4 dargestellt, beide, aneinander angrenzend angeordneten Isolationskerne 1 ihre Trägerbleche 5 überragen. Oder, wie in der unteren Hälfte von Fig. 4 dargestellt, es kann eines der beiden Isolationssegmente zum eigenen Trägerblech 5 zurückversetzt sein, während das andere sein Trägerblech überragt. Je nach Anwendung kann somit das Isolationssegment bündig auf das Trägerblech aufgesetzt sein, oder aber, wie dies in Fig. 2 angedeutet ist, mehr oder weniger über das Trägerblech 5 hinausragen. In jedem Fall ist das Kantenschutzband 32 vorteilhafterweise genügend lang ausgebildet, damit es auf der Seite der Grundfläche 11 des Isolationskerns zwischen dem Isolationskern und dem Trägerblech 5 eingeklemmt werden kann und der Isolationskern nicht zwischen Kantenschutzband und Trägerblech freigelegt wird.

Bei der Montage wird das Kantenschutzband vorteilhafterweise erst an der Grundfläche des Isolationskerns und anschliessend zusammen mit dem Isolationskern auf dem Trägerblech befestigt. Zur Befestigung am Isolationskern kann das den Kantenbereich 13 umgebende Kantenschutzband mittels einer durchgehenden Naht 42 angenäht werden. Ist das Kantenschutzband vor der Montage bereits in die richtige Form gebogen, so kann die Befestigung leicht mit einer einzigen Naht erfolgen.

Muss aus fertigungstechnischen Gründen jedoch das Kantenschutzband erst an der Aussenfläche positioniert und anschliessend gebogen und definitiv befestigt werden, bietet sich die Ausführungsform gemäss Fig. 3 an. Das Kantenschutzband 32 ist hier in einem ersten Schritt mit einer ersten Naht 41 von der Aussenfläche 12 her am Isolationskern fixiert. Dabei wird ein Teil der Deckfolie 2 angehoben, das Kantenschutzband 32 zwischen Deckfolie und Isolationskern geschoben und anschliessend Deckfolie mit Kantenschutzband mittels einer ersten Naht 41 fest vernäht. Anschliessend wird das um den Kantenbereich 13 des Isolationskerns gebogene Kantenschutzband mittels einer zweiten Naht 42 definitiv festgenäht. Die zweite Naht kann derart platziert werden, dass sie das Kantenschutzband auf beiden Seiten des Isolationskerns erfasst. Wird das Kantenschutzband 32 auf der Seite der Aussenfläche 12 jedoch zwischen der Deckfolie 2 und dem Isolationskern 1 geführt, kann die zweite Naht 42 derart platziert werden, dass sie auf der Seite der Aussenfläche lediglich durch die Deckfolie führt. Auf diese Weise kann verhindert werden, dass sich die Deckfolie während dem Betrieb von dem Isolationskern löst.

Die zur Befestigung des Isolationskerns an den Blechsegmenten 5 verwendeten Befestigungsnadein 61 sind vorteilhafterweise nahe am Rand des Isolationskerns angeordnet. Dadurch wird verhindert, dass sich die unter Vorspannung gegeneinander verpresste Isolationsmatten zweier Isolationssegmente im Kontaktbereich von dem Blechsegment lösen. Beim Befestigen an den Blechsegmenten wird zuerst der fertig vemähte Isolationskern auf die Befestigungsnadeln 61 aufgesteckt und anschliessend mit den Federspannblechen 62 fixiert.

### Bezugszeichenliste

- 1: Isolationskern, Isoliermatte
- 11: Grundfläche
- 12: Aussenfläche
- 13: Kantenbereich
- 2: Deckfolie
- 31: Kantenschutzfarbe
- 32: Kantenschutzband
- 41: Aussennaht
- 42: Innennahf
- 5: Trägerblechsegment
- 61: Befestigungsnadel
- 62: Federspannblech
- 7: Gehäuseteil

## Patentansprüche

1. Isolationssegment zum thermischen Isolieren einer heissen Oberfläche, umfassend einen Isolationskern (1) mit einer Grundfläche (11), einer Aussenfläche (12) und einem Kantenbereich (13) sowie Mittel zum Schützen des Isolationskerns im Kantenbereich, **dadurch gekennzeichnet, dass** die Mittel zum Schützen des Isolationskerns ein Kantenschutzband (32) umfassen, welches den Isolationskern im Kantenbereich (13) ummantelt.

2. Isolationssegment nach Anspruch 1, **dadurch gekennzeichnet, dass** das Kantenschutzband (32) ein Glasfasergewebe enthält.

3. Isolationssegment nach einem der Ansprüche 1 oder 2, **dadurch gekennzeichnet, dass** das Kantenschutzband (32) im Bereich der Aussenfläche (12) zwischen dem Isolationskern (1) und einer die Aussenfläche (12) des Isolationskerns zumindest teilweise abdeckenden Deckfolie (2) eingebracht ist.

4. Isolationssegment nach einem der Ansprüche 1 bis 3, **dadurch gekennzeichnet, dass** der Isolationskern (1) mit der Grundfläche (11) zumindest teilweise auf einem Trägerblech (5) aufliegt, und dass das Kantenschutzband (32) im Bereich der Grundfläche (11) zwischen dem Isolationskern (1) und dem Blechsegment (5) eingebracht ist.

5. Isolationssegment nach einem der Ansprüche 1 bis 4, **dadurch gekennzeichnet, dass** das Kantenschutzband (32) mittels mindestens einer Naht (41, 42) an dem Isolationskern (1) befestigt ist.

6. Isolationssegment nach Anspruch 5, **dadurch gekennzeichnet, dass** das Kantenschutzband (32) mittels einer ersten Naht (41) auf der Seite der Aussenfläche (12) und mittels einer zweiten Naht (42) auf der Seite der Grundfläche (11) an dem Isolationskern (1) befestigt ist.

7. Isolationssegment nach einem der Ansprüche 5 oder 6, **dadurch gekennzeichnet, dass** das Kantenschutzband (32) mittels einer von der Seite der Aussenfläche (12) bis zur Seite der Grundfläche (11) durchgehenden Naht (42) am Isolationskern (1) befestigt ist.

8. Isolationssegment nach einem der Ansprüche 1 bis 7, **dadurch gekennzeichnet, dass** auf den Isolationskern (1) zwischen dem Isolationskern (1) und dem Kantenschutzband (32) eine Farbschicht (31) aufgebracht ist.

9. Isolationssegment nach Anspruch 8, **dadurch gekennzeichnet, dass** die Farbschicht (31) eine adhäsive Komponente enthält.

10. Turbolader mit einem Gehäuse, **gekennzeichnet durch** das Gehäuse zumindest teilweise abdeckende Isolationssegmente nach einem der Ansprüche 1 bis 9.

11. Verfahren zum Befestigen eines Kantenschutzbandes (32) an einem Isolationskern
(1) eines Isolationssegmentes, bei welchem Verfahren
das Kantenschutzband (32) an einem Kantenbereich (13) angrenzend auf einer Aussenfläche (12) des Isolationskerns (1) angeordnet wird;
das Kantenschutzband (32) um den Kantenbereich (13) bis zu einer an den Kantenbereich angrenzend auf einer der Aussenfläche gegenüberliegend angeordneten Grundfläche (11) geführt wird; und
das Kantenschutzband (32) auf der Seite der Aussenfläche (12) und auf der Seite der Grundfläche (11) mittels insgesamt mindestens einer Naht (41, 42) am Isolationskern (1) befestigt wird.

12. Befestigungsverfahren nach Anspruch 11, bei welchem
das Kantenschutzband (32) auf der Seite der Aussenfläche (12) des Isolationskerns (1) zwischen den Isolationskern und eine den Isolationskern gegen Aussen abdeckende Deckfolie (2) geschoben wird.

13. Befestigungsverfahren nach einem der Ansprüche 11 oder 12, bei welchem
das Kantenschutzband (32) mittels einer ersten Naht (41) auf der Seite der Aussenfläche (12) und mittels einer zweiten Naht (42) auf der Seite der Grundfläche (11) am Isolationskern (1) befestigt wird.
